Europäisches Patentamt

(19) European Patent Office

Office européen des brevets

(11) Publication number : **0 285 640 B1**

(12) # EUROPEAN PATENT SPECIFICATION

(45) Date of publication of patent specification :
13.11.91 Bulletin 91/46

(51) Int. Cl.⁵ : **C08F 4/68, C08F 10/02**

(21) Application number : 87906719.7

(22) Date of filing : 30.09.87

(86) International application number:
PCT/US87/02462

(87) International publication number:
WO 88/02377 07.04.88 Gazette 88/08

(54) ETHYLENE POLYMERIZATION CATALYST.

(30) Priority : 30.09.86 US 913404

(43) Date of publication of application :
12.10.88 Bulletin 88/41

(45) Publication of the grant of the patent :
13.11.91 Bulletin 91/46

(84) Designated Contracting States :
AT BE CH DE FR GB IT LI LU NL SE

(56) References cited :
EP-A- 0 123 317
Journal of the American Chemical Society,
vol. 107, 1985, American Chemical Society(US)
F.A. Cotton et al.:"Mononuclear and binuclear
cationic complexes of vanadium(II)", pages
3850-3855, see whole article

(73) Proprietor : UNION CARBIDE CORPORATION
39 Old Ridgebury Road
Danbury Connecticut 06817 (US)

(72) Inventor : ZOECKLER, Mary, Therese
412 Blue Spring Road
Princeton, NJ 08540 (US)
Inventor : KAROL, Frederick, John
18 Hiland Drive
Belle Mead, NJ 08502 (US)

(74) Representative : Barz, Peter, Dr. et al
Schmied-Kowarzik & Partner Siegfriedstrasse
8
W-8000 München 40 (DE)

EP 0 285 640 B1

## Description

This invention relates to a vanadium catalyst useful in ethylene polymerization.

While titanium and chromium catalysts are commonly used in ethylene polymerization, vanadium catalysis has received much less attention. In the past, when vanadium catalysts have been used, often it was in a solution process using soluble vanadium catalysts. Under such solution process conditions with soluble vanadium catalysts, the polyethylenes produced had a very narrow molecular weight distribution.

When supported vanadium catalysts have been described in the literature, these catalysts have generally been based on monomeric species such as $VCl_4$, $VCl_3$, $VOCl_3$, triisobutyl vanadate, and vanadium tris-acetyl acetonate. These vanadium compounds can be reacted with the surface of supports such as silica to form chemically-anchored vanadium species. Ethylene polymerization with these catalysts provides polyethylenes of intermediate or broad molecular weight distribution. Supported vanadium catalysts of the type described above exhibit complex kinetic behavior characterized by erratic reaction rates, lack of reproducibility, attraction to the walls of the reactor causing fouling, and, in general, behavior not regarded as commercially suitable. These features are significant factors responsible for the lack of commercial use of vanadium catalysts for polyethylene production.

The art is constantly seeking catalysts which combine controllable polymerization kinetics, high hydrogen response for molecular weight control, and high productivities for polyethylene resins having densities ranging from 0.86 to 0.96. Catalysts which display these characteristics as well as providing polyethylene particles of high bulk density and attractive particle size would represent a major advance. Last, but not least, catalysts which contain discrete, isolatable complexes of well-defined compositions are particularly amenable to study, certainly a further advantage from a developmental point of view.

EP-A-123317 discloses a vanadium dihalide-ether complex catalyst carried on a porous support, said catalyst is reported to be capable, in combination with a cocatalyst, of giving high activity in olefin polymerization and to show good sensitivity to molecular weight control agents.

An object of this invention is to provide an ethylene polymerization catalyst, which meets one, and preferably more, of the aforementioned characteristics. Other objects and advantages will become apparent hereinafter.

According to the present invention, an ethylene polymerization catalyst has been discovered comprising:

(i) a complex having at least one cation and at least one anion wherein the cation is $V_2X_3(ED)_m$ and the anion is $MCl_bR_c$ wherein

X = Cl, Br, or I, or mixtures thereof

ED = an electron donor selected from ethers, phosphines, ketones, isocyanides, and esters, each electron donor having 2 to 20 carbon atoms

M = Al or Mg

R = an alkyl radical having 1 to 14 carbon atoms

m = an integer from 3 to 6

b = 2 when M = Al and 3 when M = Mg

c = 2 when M = Al and 0 when M = Mg,

said complex impregnated on an inorganic oxide support;

(ii) a halocarbon promoter; and

(iii) a hydrocarbyl aluminum cocatalyst.

The vanadium complex can be synthesized as set forth in Cotton et al, Mononuclear and Binuclear Cations Complexes of Vanadium (II), Journal of the American Chemical Society, 1985, Volume 107, pages 3850 to 3855.

Another procedure for the synthesis of the vanadium complex follows:

A 0.05 to 0.10 molar solution of $VCl_3(THF)_3$ in tetrahydrofuran is first prepared. This solution is treated with diethylaluminum ethoxide to provide an aluminum/vanadium atomic ratio between about 0.5 and about 3.0. The aluminum/vanadium atomic ratio is preferably about 0.7 to about 3.0. The solution is then refluxed, under an inert atmosphere such as nitrogen, until it becomes bright green. The reflux time can be in the range of about 15 minutes to about 3 hours depending on the Al/V atomic ratio selected. Where a hydride is used to provide the anion, the reaction can be carried out at room temperature rather than at reflux temperature. As long as the reactants are in solution, the molarity is not important to the result. Selection of molarity is, then, a matter of practicality. The bright green solution is cooled and hexane or other hydrocarbon solvent is added to precipitate green crystals of the dimeric vanadium salt, i.e.,

$[V_2Cl_3(THF)_6]^+ [AlCl_2(C_2H_5)_2]^-$

wherein THF = tetrahydrofuran. The crystals are isolated and washed with cold hexane. The components used to provide the complex can be varied as indicated below.

2

While it is not necessary to support the complex, supported complexes do provide superior performance are preferred. Silica is the preferred support. Other suitable inorganic oxides are aluminum phosphate, alumina, silica/alumina mixtures, silica modified with an organoaluminum compound such as triethylaluminum (TEAL), silica modified with diethylzinc, and a mixture of silica and calcium carbonate. A typical support is a solid, particulate porous material essentially inert to the polymerization. It is used as a dry powder having an average particle size of about 10 to about 250 µm and preferably about 30 to about 100 µm; a surface area of at least about 3 square meters per gram and preferably at least about 50 square meters per gram; and a pore size of at least about 8 nm (80 Angstroms) and preferably at least about 10 nm (100 Angstroms).

Generally, the amount of support used is that which will provide about 0.05 to about 0.5 millimole of vanadium per gram of support and preferably about 0.2 to about 0.3 millimole of vanadium per gram of support.

The supported catalyst can be prepared as follows:

(i) A silica gel is first activated at about 600°C under dry, deoxygenated nitrogen for about 20 hours to provide a support free of adsorbed water and containing less than about 0.7 millimole of surface hydroxy groups per gram of silica. The vanadium complex crystals, prepared as above, are redissolved in freshly distilled tetrahydrofuran. This solution of purified dimer is added to the silica in an amount sufficient to provide about 0.3 millimole of vanadium per gram of silica. The resulting slurry is stirred at room temperature (about 20°C) for about 30 minutes under nitrogen. The tetrahydrofuran is then (partially) removed under vacuum to provide a free-flowing, powdered catalyst with a mole ratio of electron donor (in this case, tetrahydrofuran) to vanadium of about 3 to about 15. It is noted that the complex per se contains 3 to 6 moles of the electron donor and the balance is excess.

The preparation of the supported catalyst can be simplified considerably by eliminating the isolation step. In this case, the bright green reaction solution is added to the silica in an amount sufficient to provide about 0.3 millimole of vanadium per gram of silica and the procedure in the preceding paragraph is then continued. This technique leaves excess diethylaluminum ethoxide in the supported catalyst. The presence of this excess is advantageous because it results in improved hydrogen response. The hydrogen response can also be increased by mix tank treatment with diethylaluminum chloride. In this case, melt flow ratio values are also lowered.

The electron donors incorporated into the vanadium complex are selected from ethers, phosphines, ketones, isocyanides, and esters, each electron donor having 2 to 20 carbon atoms. Among these electron donors, the preferred are alkyl and cycloalkyl ethers having 2 to 20 carbon atoms; alkyl and aryl phosphines having 3 to 20 carbon atoms; dialkyl, diaryl, and alkylaryl ketones having 3 to 20 carbon atoms; alkyl and aryl isocyanides having 2 to 20 carbon atoms; and alkyl, alkoxy, and alkylalkoxy esters of alkyl and aryl carboxylic acids having 2 to 20 carbon atoms. The most preferred electron donors include tetrahydrofuran and triethylphosphine. Other examples of suitable electron donors are methyl formate, ethyl acetate, butyl acetate, ethyl ether, dioxane, di-n-propyl ether, dibutyl ether, ethyl formate, methyl acetate, ethyl anisate, ethylene carbonate, tetrahydropyran, and ethyl propionate. The electron donor will have the proper valence when included in the complex, as will the cation and anion. In its compound form, the electron donor is preferably the solvent for the vanadium compound, which is used to prepare the complex and contains a like ligand. The vanadium compound is the reaction product of a compound having the formula $VX_3$ and one of the electron donor compounds mentioned above. Where $VCl_3(THF)_3$ is the initial vanadium compound, tetrahydrofuran is used as the solvent. Alternately, the electron donor can be introduced in a ligand exchange reaction with a preformed complex, e.g., treating the $[V_2Cl_3(THF)_6]^+$ ion with triethylphosphine to yield the $[V_2Cl_3(triethylphosphine)_6]^+$ ion.

Compounds which can be used to provide the anion portion of the complex have the formula $R_2AlOR$ or $R_2AlH$ wherein R is an alkyl radical having 1 to 14 carbon atoms, and preferably 1 to 4 carbon atoms, and each R is alike or different. Preferred alkyl radicals are ethyl and isobutyl. Examples of suitable anion providing compounds are diethyl aluminum ethoxide, diisobutyl aluminum ethoxide, dimethyl aluminum ethoxide, diethyl aluminum methoxide, diethyl aluminum propoxide, diethyl aluminum butoxide, diethyl aluminum hydride, and diisobutyl aluminum hydride.

The halocarbon promoter can have the following formula:

$$R_xCX_{(4-x)}$$

wherein

R = hydrogen or an unsubstituted or halogen substituted alkyl radical having 1 to 6 carbon atoms;

X = a halogen; and

x = 0, 1, or 2.

Preferred promoters include fluoro-, chloro-, and bromo-substituted methane or ethane having at least 2 halogen atoms attached to a carbon atom, e.g., methylene dichloride, 1,1,1-trichloroethane, chloroform, $CBr_4$, $CFCl_3$, $CH_3CCl_3$, and $CF_2ClCCl_3$. The first three mentioned promoters are especially preferred. About 0.1 to about 10 moles, and preferably about 0.2 to about 2 moles, of promoter can be used per mole of cocatalyst.

3

The hydrocarbyl aluminum cocatalyst can be represented by the formula $R_3Al$ wherein each R is an alkyl, cycloalkyl, aryl, or hydride radical; at least one R is a hydrocarbyl radical; two or three R radicals can be joined in a cyclic radical forming a heterocyclic structure; each R can be alike or different; and each R, which is a hydrocarbyl radical, has 1 to 20 carbon atoms, and preferably 1 to 10 carbon atoms. Further, each alkyl radical can be straight or branched chain and such hydrocarbyl radical can be a mixed radical, i.e., the radical can contain alkyl, aryl, and/or cycloalkyl groups. Examples of suitable radicals are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl, phenethyl, methoxyphenyl, benzyl, tolyl, xylyl, naphthyl, methylnaphthyl, cyclohexyl, cycloheptyl, and cyclooctyl.

Examples of suitable hydrocarbyl aluminum compounds are as follows: triisobutylaluminum (TIBA), trihexylaluminum, di-isobutylaluminum hydride, dihexylaluminum hydride, isobutylaluminum dihydride, hexylaluminum dihydride, di-isobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. The preferred hydrocarbyl aluminums are triethylaluminum and triisobutylaluminum and also trihexylaluminum, di-isobutylaluminum hydride, and dihexylaluminum hydride.

The cocatalyst and promoter can be added to the supported vanadium complex either before or during the polymerization reaction. They can be added together or separately, simultaneously or sequentially. The cocatalyst and promoter are preferably added separately as solutions in an inert solvent, such as isopentane, to the polymerization reaction at the same time as the flow of the ethylene is initiated. The cocatalyst is necessary to obtain any significant polymerization. The promoter, on the other hand, can be considered a preferred option. About 5 to about 500 moles, and preferably about 10 to about 40 moles, of cocatalyst can be used per mole of vanadium complex.

The ethylene polymerization can be conducted in the gas phase or liquid phase using conventional techniques such as fluidized bed, slurry, or solution processes. A continuous, fluidized bed process is preferred. Using this fluidized bed process, the vanadium complex, the cocatalyst, the promoter, the ethylene monomer, and any comonomers are continuously fed into the reactor and polyethylene product is continuously removed. The density of the ethylene (co)polymer produced may be varied over a wide range depending upon the amount of alpha-olefin comonomer added, if any, and upon the particular comonomer employed. The greater the mole percent of alpha-olefin, the lower the density.

The fluidized bed polymerization is conducted at a temperature below the sintering temperature of the product. The operating temperature is generally in the range of about 10°C to about 115°C. Preferred operating temperatures will vary depending upon the density desired. High density polyethylenes of greater than about 0.94 grams per cubic centimeter (g/cm³) are produced at operating temperatures of about 85°C to about 115°C, and preferably about 90°C to about 100°C. Low density polyethylenes ranging in density from about 0.91 to about 0.94 g/cm³ are preferably produced at an operating temperature of about 75°C to about 90°C. Very low density polyethylenes of less than about 0.91 g/cm³ are preferably produced at an operating temperature of about 10°C to about 80°C. In the case of very low density polyethylenes, it is necessary to dilute the reaction mixture with a large quantity of a diluent gas in order to prevent the formation of polymer agglomerates and sustain polymerization on a continuous basis.

The fluidized bed reactor is typically operated at pressures of up to about 7.0 MPa gauge (1,000 psig), and preferably about 0.44 to about 2.51 MPa gauge (about 50 to about 350, psig).

A chain transfer agent, such as hydrogen, can be used to terminate the polymer chain. Usually the ratio of hydrogen to ethylene will vary between about 0.001 to about 2.0 moles of hydrogen per mole of ethylene.

The invention is illustrated by the following examples.

## EXAMPLE 1

Preparation of catalyst precursors (THF = tetrahydrofuran):

(i) In a dry, nitrogen-purged flask fitted with a reflux condenser and nitrogen inlet are placed 20 milliliters of $VCl_3(THF)_3$ (0.06 molar solution in THF, 1.2 millimoles V) and 2.65 milliliters of $(C_2H_5)_2AlOC_2H_5$ (1.36 molar solution in hexane, 3.6 millimoles Al). The reaction solution is refluxed under nitrogen for 35 minutes during which time the color changes to a bright green. The solution is cooled to room temperature and an equal volume of hexane is added. Bright green crystals of the vanadium (II) dimeric complex are isolated, washed with cold hexane, and redissolved in freshly distilled THF.

Silica, predried and activated at 600°C, is slurried in THF under nitrogen. The silica used is a dry powder having an average particle size of about 30 to about 100 μm. It has a surface area greater than or equal to about 50 m²/g and pore sizes of greater than or equal to about 10 nm (100 Angstroms). A portion of the solution of purified dimer is added to give a vanadium loading of 0.30 millimole of vanadium per gram of silica. The slurry is stirred at room temperature for 30 minutes, and dried to a free-flowing, pale green powder under vacuum.

(ii) The same procedure as described in paragraph (i) above is followed except that 50 milliliters of $VCl_3(THF)_3$ (0.07 molar solution, 3.5 millimoles V) and 1.80 milliliters of $(C_2H_5)_2AlOC_2H_5$ (1.36 molar solution, 2.4 millimoles Al) are used. At the lower Al/V ratio, four hours at reflux are required for a complete reaction to form the dimer. Rather than isolating the crystalline dimer, the reaction solution is cooled to room temperature and added directly to a slurry of silica in THF. After stirring for 30 minutes at room temperature, the catalyst precursor is dried under vacuum to a free-flowing pale green powder.

(iii) The procedure described in paragraph (ii) is followed except that 15 milliliters of $VCl_3(THF)_3$ (0.06 molar solution, 0.9 millimoles V) and 1.6 milliliters of $(C_2H_5)_2AlH$ (1.0 molar solution, 1.6 millimoles Al) are used. The reaction is complete after 20 minutes at reflux.

(iv) The procedure described in paragraph (ii) is followed except that 20 milliliters of $VCl_3(THF)_3$ (0.06 molar solution, 1.2 millimoles V) and 1.6 milliliters of $(isobutyl)_2AlH$ (1.0 molar solution, 1.6 millimoles Al) are combined and stirred at room temperature under nitrogen for one hour. A dark green solution is formed. This solution is added to a slurry of silica (3.80 grams) in THF. The slurry is stirred for 10 minutes at room temperature, then dried under vacuum to a free-flowing pale green powder.

## EXAMPLE 2

Preparation of catalyst precursor:

A 0.06 molar solution of $VCl_3(THF)_3$ is prepared by dissolving 23.60 grams $VCl_3$ (0.15 mole) in 2,500 milliliters THF at 70°C under nitrogen over several hours. The solution is cooled to 60°C, and $(C_2H_5)_2AlOC_2H_5$ (25 weight percent in hexane) is added to give an atomic ratio of Al/V = 0.7. The mixture is stirred at 70°C under 0.1 MPa gauge (1 psig) nitrogen for 24 hours resulting in a clear green solution. 500 grams of silica, activated at 600°C, are added. After stirring for 30 minutes, the catalyst precursor is dried at 70°C under a slow nitrogen purge to give a THF level of 12 weight percent. The dried catalyst is a pale beige, free-flowing powder.

## EXAMPLES 3 TO 17

To a slurry reactor are added sufficient catalyst precursor to give 0.03 millimole of vanadium, prepared by one of the procedures in Example 1 or 2; 480 milliliters of hexane; 20 milliliters of 1-hexene as comonomer; 40 equivalents of triethylaluminium; 40 equivalents of $CFCl_3$; ethylene at a partial pressure of 1.09 MPa gauge (143 psig); and hydrogen at a partial pressure of 0.1 MPa gauge (1 psig).

The following variables are set forth in Table I below:

1. In example 3, the cocatalyst is triisobutylaluminum instead of triethylaluminum.
2. In example 12, triethylphosphine is used instead of THF.
3. The reducing agent and support are those used in the preparation of the catalyst precursor.
4. The activation temperature is given for the support.
5. The activity of the catalyst is measured in grams of polyethylene per millimole of vanadium per hour per 0.8 MPa gauge (100 psig) of ethylene.
6. Melt index: ASTM D-1238, Condition E. Measured at 190°C and reported as grams per 10 minutes.
7. Melt flow ratio: Ratio of Flow Index to Melt Index. Flow index: ASTM D-1238, Condition F. Measured at 10 times the weight used in the melt index test above.
8. Polymer density: ASTM D-1505 procedure is followed for polymers having a density of less than 0.940 gram per cubic centimeter and a modified procedure is used for polymers having a density equal to or greater than 0.940 gram per cubic centimeter. For the low density polymers, a plaque is made and conditioned for one hour at 100°C to approach equilibrium crystallinity. For the high density polymers, the plaque is conditioned for one hour at 120°C to approach equilibrium crystallinity, and is then quickly cooled to room temperature. Measurement for density is then made in a density gradient column and density values are reported as grams per cubic centimeter.
9. Catalyst preparation refers to the procedures in Examples 1 and 2.
10. The aluminium to vanadium ratio is an atomic ratio.
11. i-Bu = isobutyl.
12. The silica is as described in example 1(i).

TABLE I

| Example | Reducing Agent | Support | Activation Temperature (°C) | Catalyst Activity | Melt Index | Melt Flow Ratio | Polymer Density | Catalyst Preparation | Al/V |
|---|---|---|---|---|---|---|---|---|---|
| 3 | $(C_2H_5)_2AlOC_2H_5$ | Silica | 600 | 3200 | 0.35 | 112 | 0.9657 | Example 1(i) | 0.5 |
| 4 | $(C_2H_5)_2AlOC_2H_5$ | Silica | 600 | 2300 | 5.50 | 64 | 0.9547 | Example 1(i) | 0.5 |
| 5 | $(C_2H_5)_2AlOC_2H_5$ | Silica modified with TEAL | 600 | 1700 | 11.2 | 90 | 0.9546 | Example 1(i) | 0.5 |
| 6 | $(C_2H_5)_2AlOC_2H_5$ | Aluminum Phosphate | 600 | 1900 | 12.3 | 44 | 0.9560 | Example 1(i) | 0.5 |
| 7 | $(C_2H_5)_2AlOC_2H_5$ | Silica | 600 | 2900 | 0.35 | 100 | 0.9462 | Example 1(ii) | 0.7 |
| 8 | $(C_2H_5)_2AlOC_2H_5$ | Silica | 800 | 3600 | 0.89 | 72 | 0.9462 | Example 1(ii) | 0.7 |
| 9 | $(C_2H_5)_2AlOC_2H_5$ | Silica | 600 | 3500 | 0.21 | 90 | -- | Example 2 | 0.7 |
| 10 | $(C_2H_5)_2AlOC_2H_5$ | Silica | 800 | 2600 | 27.3 | 37 | -- | Example 1(ii) | 3.0 |
| 11 | $(C_2H_5)_2AlOC_2H_5$ | Silica modified with TEAL | 600 | 2800 | 20.9 | 54 | 0.9562 | Example 1(ii) | 2.4 |
| 12 | $(C_2H_5)_2AlOC_2H_5$ | Silica | 600 | 1100 | 3.07 | 76 | 0.9596 | Example 1(i) | 0.5 |
| 13 | $(C_2H_5)_2AlH$ | Silica | 800 | 3100 | 0.34 | 97 | -- | Example 1(iii) | 0.5 |
| 14 | $(C_2H_5)_2AlH$ | Silica | 800 | 2700 | 0.40 | 78 | -- | Example 1(iii) | 1.0 |
| 15 | $(i-Bu)_2AlH$ | Silica | 600 | 3500 | 2.09 | 62 | 0.9509 | Example 1(iv) | 1.3 |
| 16 | $(i-Bu)_2AlOC_2H_5$ | Silica | 600 | 2800 | 4.54 | 62 | -- | Example 1(iv) | 2.7 |
| 17 | Mg | Silica | 800 | 2100 | 43.3 | 20 | -- | | |

EP 0 285 640 B1

EXAMPLES 18 TO 21

Ethylene polymerization is carried out in a fluidized bed as described above using the catalyst prepared by the procedure of Example 2, the comonomer is 1-hexene; the cocatalyst is triethylaluminum; and the promoter is $CFCl_3$.

The variables are set forth in Table II.

Notes concerning Table II;

1. Vanadium loading is given in millimole of vanadium per gram of catalyst.

2. The diethylaluminum chloride is added to the catalyst precursor in a mix tank treatment prior to its use in the polymerization process.

3. Fluidized bed pressure is 2.17 MPa (315 psia).

4. Melt index, flow index, melt flow ratio, and polymer density are described above.

5. Bulk density: ASTM D-1895, Method B. The resin is poured via a 0.95 cm (3/8-inch) diameter funnel into a 400 milliliter graduated cylinder to the 400 milliliter line without shaking the cylinder, and weighed by difference. Density values are reported as $kg/m^3$ (pounds per cubic foot).

6. Tetrahydrofuran is given in weight percent based on catalyst.

## TABLE II

| Example | 18 | 19 | 20 | 21 |
|---|---|---|---|---|
| Vanadium loading (millimole/gram) | 0.27 | 0.27 | 0.35 | 0.27 |
| Tetrahydrofuran (weight percent) | 12 | 12 | 30 | 10 |
| Diethylaluminum chloride to vanadium (molar ratio) | 0 | 0 | 0 | 1.5 |
| Fluidized bed temperature (°C) | 90 | 100 | 90 | 90 |
| $H_2/C_2$ ratio | 0.030 | 0.036 | 0.032 | 0.021 |
| $C_6/C_2$ ratio | 0.007 | 0.005 | 0.006 | 0.006 |
| $C_2H_4$ partial pressure (%) | 73.6 | 72.6 | 74.0 | 72.5 |
| Resin production rate, kg/hour (pounds/hour) | 11.3(24.9) | 9.42(20.8) | 7.88(17.4) | 10.6(23.4) |
| Cocatalyst feed rate ($cm^3$/hour) | 160 | 130 | 150 | 140 |
| Melt index (grams/10 minutes) | 0.291 | 0.346 | 0.290 | 0.409 |
| Flow index | 27.1 | 27.5 | 24.9 | 25.5 |
| Melt flow ratio | 93 | 79 | 86 | 62 |
| Polymer density (grams/$cm^3$) | 0.954 | 0.953 | 0.953 | 0.953 |
| Vanadium in resin (ppm) | 3.8 | 3.8 | 4.5 | 4.1 |
| Ash in resin (weight percent) | 0.045 | 0.044 | 0.045 | 0.049 |
| Bulk density, $kg/m^3$ (pounds/cubic foot) | 291(17.5) | 292(17.6) | 307(18.5) | 357(21.5) |
| Average particle size of resin, mm (inch) | 0.99(0.039) | 0.92(0.036) | 1.3(0.052) | 1.1(0.043) |

7

**Claims**

1. An ethylene polymerization catalyst comprising:

(i) a complex having at least one cation and at least one anion wherein the cation is $V_2X_3(ED)_m$ and the anion is $MCl_bR_c$ wherein

X = Cl, Br, or I, or mixtures thereof

ED = an electron donor selected from ethers, phosphines, ketones, isocyanides, and esters, each electron donor having 2 to 20 carbon atoms

M = Al or Mg

R = an alkyl radical having 1 to 14 carbon atoms

m = an integer from 3 to 6

b = 2 when M = Al and 3 when M = Mg

c = 2 when M = Al and 0 when M = Mg,

said complex impregnated on an inorganic oxide support;

(ii) a halocarbon promoter; and

(iii) a hydrocarbyl aluminum cocatalyst

2. An ethylene polymerization catalyst comprising:

(i) a complex having at least one cation and at least one anion wherein the cation is $V_2X_3(ED)_m$ and the anion is $MCl_bR_c$ wherein

X = Cl, Br, or I, or mixtures thereof

ED = an electron donor selected from ethers, phosphines, ketones, isocyanides, and esters, each electron donor having 2 to 20 carbon atoms

M = Al or Mg

R = an alkyl radical having 1 to 14 carbon atoms

m = an integer from 3 to 6

b = 2 when M = Al and 3 when M = Mg

c = 2 when M = Al and 0 when M = Mg;

and

(ii) a hydrocarbyl aluminum cocatalyst.

3. An ethylene polymerization catalyst comprising:

(i) a complex having at least one cation and at least one anion wherein the cation is $V_2X_3(ED)_m$ and the anion is $MCl_bR_c$ wherein

X = Cl, Br, or I, or mixtures thereof

ED = an electron donor selected from ethers, phosphines, ketones, isocyanides, and esters, each electron donor having 2 to 20 carbon atoms

M = Al or Mg

R = an alkyl radical having 1 to 14 carbon atoms

m = an integer from 3 to 6

b = 2 when M = Al and 3 when M = Mg

c = 2 when M = Al and 0 when M = Mg,

said complex impregnated on an inorganic oxide support; and

(ii) a hydrocarbyl aluminum cocatalyst.

4. The catalyst defined in any one of claims 1 to 3 wherein ED is selected from alkyl and cycloalkyl ethers having 2 to 20 carbon atoms; alkyl and aryl phosphines having 3 to 20 carbon atoms; dialkyl, diaryl, and alkylaryl ketones having 3 to 20 carbon atoms; alkyl and aryl isocyanides having 2 to 20 carbon atoms; and alkyl, alkoxy, and alkylalkoxy esters of alkyl and aryl carboxylic acids having 2 to 20 carbon atoms.

5. The catalyst defined in claim 4 wherein ED is selected from tetrahydrofuran and triethylphosphine.

6. The catalyst defined in any one of claims 1 and 3 to 5 wherein the support is silica.

7. The catalyst defined in claim 1 wherein the promoter is represented by the formula:

$$R_xCX_{(4-x)}$$

wherein

R = hydrogen or an unsubstituted or halogen substituted alkyl radical having 1 to 6 carbon atoms;

X = a halogen; and

x = 0, 1, or 2.

8. The catalyst defined in claim 7 wherein the promoter is a fluoro-, chloro-, or bromo-substituted methane or ethane having at least 2 halogen atoms attached to a carbon atom.

9. The catalyst defined in any one of claims 1 to 8 wherein the cocatalyst is represented by the formula $R_3Al$ wherein each R is an alkyl, cycloalkyl, aryl, or hydride radical; at least one R is a hydrocarbyl radical; two or three R radicals can be joined in a cyclic radical forming a heterocyclic structure; each R can be alike or different; and each R, which is a hydrocarbyl radical, has 1 to 20 carbon atoms.

10. The catalyst defined in claim 9 wherein the cocatalyst is selected from triethylaluminum any triisobutylaluminum.

11. An ethylene polymerization catalyst precursor comprising:

a complex having at least one cation and at least one anion wherein the cation is $V_2X_3(ED)_m$ and the anion is $MCl_bR_c$ wherein

X = Cl, Br, or I, or mixtures thereof

ED = an electron donor selected from ethers, phosphines, ketones, isocyanides, and esters, each electron donor having 2 to 20 carbon atoms

M = Al or Mg

R = an allyl radical having 1 to 14 carbon atoms

m = an integer from 3 to 6

b = 2 when M = Al and 3 when M = Mg

c = 2 when M = Al and 0 when M = Mg,

said complex impregnated on an inorganic oxide support.

12. A process for the polymerization of ethylene or ethylene together with at least one comonomer comprising contacting the monomer(s), in the gas or liquid phase with a catalyst according to any one of Claims 1 to 10 in such a manner that a polymer or copolymer is produced.

13. A process for preparing a supported catalytic complex, comprising

(i) refluxing, in solution in an electron donor ED and under an inert atmosphere, a compound having the formula $VX_3(ED)_m$ with a compound having the formula $R_2AlOR$ or $R_2AlH$ wherein

X = Cl, Br, or I, or mixtures thereof

ED is selected from ethers, phosphines, ketones, isocyanides, and esters, each electron donor having 2 to 20 carbon atoms

R = an alkyl radical having 1 to 14 carbon atoms, each R being alike or different

m = an integer from 3 to 6; until the solution becomes green;

(ii) impregnating the green solution on an inorganic oxide support; and

(iii) drying the impregnated support to remove excess electron donor.

14. The process defined in claim 13 wherein the aluminum/vanadium atomic ratio is in the range of about 0.5:1 to about 3:1.

15. A process for preparing a supported complex, comprising

(i) reacting, in solution in an electron donor ED and under an inert atmosphere, a compound having the formula $VX_3(ED)_m$ with a compound having the formula $R_2AlH$ wherein

X = Cl, Br, or I, or mixtures thereof

ED is selected from ethers, phosphines, ketones, isocyanides, and esters, each electron donor having 2 to 20 carbon atoms

R = an alkyl radical having 1 to 14 carbon atoms, each R being alike or different

m = an integer from 3 to 6; until the solution becomes green;

(ii) impregnating the green solution on an inorganic oxide support; and

(iii) drying the impregnated support to remove excess electron donor.


**Patentansprüche**

1. Katalysator zur Ethylen-Polymerisation, umfassend:

(i) einen Komplex mit mindestens einem Kation und mindestens einem Anion, worin das Kation $V_2X_3(ED)_m$ ist und das Anion $MCl_bR_c$ darstellt, wobei

X = Cl, Br oder I oder Mischungen davon,

ED = ein Elektronendonor, der aus Ethern, Phosphinen, Ketonen, Isocyaniden und Estern ausgewählt ist, wobei jeder Elektronendonor 2 bis 20 Kohlenstoffatome aufweist,

M = Al oder Mg,

R = ein Alkylrest mit 1 bis 14 Kohlenstoffatomen,

m = eine ganze Zahl von 3 bis 6,

b = 2, wenn M = Al, und 3, wenn M = Mg,

c = 2, wenn M = Al, und 0, wenn M = Mg,

wobei der Komplex auf einen anorganischen Oxidträger imprägniert ist;

9

(ii) einen Halogenkohlenstoff-Promotor; und

(iii) einen Hydrocarbyl-Aluminium-Cokatalysator.

2. Katalysator zur Ethylen-Polymerisation, umfassend:

(i) einen Komplex mit mindestens einem Kation und mindestens einem Anion, worin das Kation $V_2X_3(ED)_m$ ist und das Anion $MCl_bR_c$ darstellt, wobei

X = Cl, Br oder I oder Mischungen davon,

ED = ein Elektronendonor, der aus Ethern, Phosphinen,

Ketonen, Isocyaniden und Estern ausgewählt ist, wobei jeder Elektronendonor 2 bis 20 Kohlenstoffatome aufweist,

M = Al oder Mg,

R = ein Alkylrest mit 1 bis 14 Kohlenstoffatomen,

m = eine ganze Zahl von 3 bis 6,

b = 2, wenn M = Al, und 3, wenn M = Mg,

c = 2, wenn M = Al, und 0, wenn M = Mg;

(ii) einen Hydrocarbyl-Aluminium-Cokatalysator.

3. Katalysator zur Ethylen-Polymerisation, umfassend:

(i) einen Komplex mit mindestens einem Kation und mindestens einem Anion, worin das Kation $V_2X_3(ED)_m$ ist und das Anion $MCl_bR_c$ darstellt, wobei

X = Cl, Br oder I oder Mischungen davon,

ED = ein Elektronendonor, der aus Ethern, Phosphinen,

Ketonen, Isocyaniden und Estern ausgewählt ist, wobei jeder Elektronendonor 2 bis 20 Kohlenstoffatome aufweist,

M = Al oder Mg,

R = ein Alkylrest mit 1 bis 14 Kohlenstoffatomen,

m = eine ganze Zahl von 3 bis 6,

b = 2, wenn M = Al, und 3, wenn M = Mg,

c = 2, wenn M = Al, und 0, wenn M = Mg,

wobei der Komplex auf einen anorganischen Oxidträger imprägniert ist; und

(ii) einen Hydrocarbyl-Aluminium-Cokatalysator.

4. Katalysator nach irgendeinem der Ansprüche 1 bis 3, worin ED ausgewählt ist aus Alkyl- und Cycloalkylethern mit 2 bis 20 Kohlenstoffatomen; Alkyl- und Arylphosphinen mit 3 bis 20 Kohlenstoffatomen; Dialkyl-, Diaryl- und Alkylarylketonen mit 3 bis 20 Kohlenstoffatomen; Alkyl- und Arylisocyaniden mit 2 bis 20 Kohlenstoffatomen; und Alkyl-, Alkoxy- und Alkylalkoxyestern von Alkyl- und Arylcarbonsäuren mit 2 bis 20 Kohlenstoffatomen.

5. Katalysator nach Anspruch 4, worin ED aus Tetrahydrofuran und Triethylphosphin ausgewählt ist.

6. Katalysator nach irgendeinem der Ansprüche 1 und 3 bis 5, worin der Träger Siliciumdioxid ist.

7. Katalysator nach Anspruch 1, worin der Promotor durch die Formel:

$$R_xCX_{(4-x)}$$

dargestellt wird, worin

R = Wasserstoff oder ein unsubstituierter oder mit Halogen substituierter Alkylrest mit 1 bis 6 Kohlenstoffatomen;

x = Halogen; und

x = 0, 1 oder 2.

8. Katalysator nach Anspruch 7, worin der Promotor ein Fluor-, Chlor- oder Brom-substituiertes Methan oder Ethan ist, das mindestens zwei an ein Kohlenstoffatom gebundene Halogenatome aufweist.

9. Katalysator nach irgendeinem der Ansprüche 1 bis 8, worin der Cokatalysator durch die Formel $R_3Al$ dargestellt wird, worin jedes R einen Alkyl-Cycloalkyl-, Aryl- oder Hydridrest darstellt; mindestens ein R ein Kohlenwasserstoffrest ist; zwei oder drei Reste R in einem cyclischen Rest, der eine heterocyclische Struktur bildet, vereint sein können; jedes R gleich oder verschieden sein kann; und jedes R, das einen Kohlenwasserstoffrest darstellt, 1 bis 20 Kohlenstoffatome aufweist.

10. Katalysator nach Anspruch 9, worin der Cokatalysator aus Triethylaluminium und Triisobutylaluminium ausgewählt ist.

11. Vorläufer eines Katalysators zur Ethylen-Polymerisation, umfassend:

(i) einen Komplex mit mindestens einem Kation und mindestens einem Anion, worin das Kation $V_2X_3(ED)_m$ ist und das Anion $MCl_bR_c$ darstellt, wobei

X = Cl, Br oder I oder Mischungen davon,

ED = ein Elektronendonor, der aus Ethern, Phosphinen,

Ketonen, Isocyaniden und Estern ausgewählt ist, wobei jeder Elektronendonor 2 bis 20 Kohlenstoffatome aufweist,

M = Al oder Mg,

R = ein Alkylrest mit 1 bis 14 Kohlenstoffatomen,

m = eine ganze Zahl von 3 bis 6,

b = 2, wenn M = Al, und 3, wenn M = Mg,

c = 2, wenn M = Al, und 0, wenn M = Mg,

wobei der Komplex auf einen anorganischen Oxidträger imprägniert ist.

12. Verfahren zur Polymerisation von Ethylen oder Ethylen zusammen mit mindestens einem Comonomer, welches umfaßt, daß das Monomer oder die Monomere in flüssiger Phase oder in der Gasphase mit einem Katalysator nach irgendeinem der Ansprüche 1 bis 10 so in Kontakt gebracht werden, daß ein Polymer oder Copolymer entsteht.

13. Verfahren zur Herstellung eines katalytischen Komplexes auf einem Träger, umfassend:

(i) das Umsetzen einer Verbindung der Formel $VX_3(ED)_m$ in Lösung in einem Elektronendonor ED in einer inerten Atmosphäre unter Rückfluß mit einer Verbindung der Formel $R_2AlOR$ oder $R_2AlH$, wobei

X = Cl, Br oder I oder Mischungen davon,

ED aus Ethern, Phosphinen, Ketonen, Isocyaniden und Estern ausgewählt ist, wobei jeder Elektronendonor 2 bis 20 Kohlenstoffatome aufweist,

R = ein Alkylrest mit 1 bis 14 Kohlenstoffatomen, wobei jedes R gleich oder verschieden ist,

m = eine ganze Zahl von 3 bis 6; bis die Lösung grün wird;

(ii) Imprägnieren eines anorganischen Oxidträgers mit der grünen Lösung; und

(iii)Trocknen des imprägnierten Trägers, um überschüssigen Elektronendonor zu entfernen.

14. Verfahren nach Anspruch 13, worin das Atomverhältnis Aluminium/Vanadium etwa 0,5 : 1 bis etwa 3 : 1 beträgt.

15. Verfahren zur Herstellung eines Komplexes auf einem Träger, umfassend:

(i) das Umsetzen einer Verbindung der Formel $VX_3(ED)_m$ in Lösung in einem Elektronendonor ED und in einer inerten Atmosphäre mit einer Verbindung der Formel $R_2AlH$, wobei

X = Cl, Br oder I oder Mischungen davon,

ED aus Ethern, Phosphinen, Ketonen, Isocyaniden und Estern ausgewählt ist, wobei jeder Elektronendonor 2 bis 20 Kohlenstoffatome aufweist,

R = ein Alkylrest mit 1 bis 14 Kohlenstoffatomen, wobei jedes R gleich oder verschieden ist,

m = eine ganze Zahl von 3 bis 6; bis die Lösung grün wird;

(ii) Imprägnieren eines anorganischen Oxidträgers mit der grünen Lösung; und

(iii)Trocknen des imprägnierten Trägers, um überschüssigen Elektronendonor zu entfernen.

## Revendications

1. Catalyseur de polymérisation d'éthylène, comprenant :

(i) un complexe ayant au moins un cation et au moins un anion dans lequel le cation est $V_2X_3(ED)_m$ et l'anion est $MCl_bR_c$ où

X = Cl, Br ou I ou leurs mélanges

ED = donneur d'électrons choisi entre des éthers, des phosphines,

des cétones, des isocyanures et des esters, chaque donneur d'électron ayant 2 à 20 atomes de carbone

M = Al ou Mg

R = radical alkyle ayant 1 à 14 atomes de carbone

m = nombre entier de 3 à 6

b = 2 lorsque M = Al et 3 lorsque M = Mg

c = 2 lorsque M = Al et 0 lorsque M = Mg,

ledit complexe étant fixé par imprégnation sur un support d'oxyde inorganique ;

(ii) un promoteur halogénocarboné ; et

(iii) un co-catalyseur du type hydrocarbylaluminium.

2. Catalyseur de polymérisation d'éthylène, comprenant :

(i) un complexe ayant au moins un cation et au moins un anion dont le cation est $V_2X_3(ED)_m$ et l'anion est $MCl_bR_c$ où

X = Cl, Br ou I, ou leurs mélanges

ED = donneur d'électrons choisi entre des éthers, des phosphines,

des cétones, des isocyanures et des esters, chaque donneur d'électron ayant 2 à 20 atomes de carbone

M = Al ou Mg

R = radical alkyle ayant 1 à 14 atomes de carbone

m = nombre entier de 3 à 6

b = 2 lorsque M = Al et 3 lorsque M = Mg

c = 2 lorsque M = Al et 0 lorsque M = Mg ;

et

(ii) un co-catalyseur du type hydrocarbylaluminium.

3. Catalyseur de polymérisation d'éthylène, comprenant :

(i) un complexe ayant au moins un cation et au moins un anion dans lequel le cation est $V_2X_3(ED)_m$ et l'anion est $MCl_bR_c$ où

X = Cl, Br ou I ou leurs mélanges

ED = donneur d'électrons choisi entre des éthers, des phosphines,

des cétones, des isocyanures et des esters, chaque donneur d'électrons ayant 2 à 20 atomes de carbone

M = Al ou Mg

R = radical alkyle ayant 1 à 14 atomes de carbone

m = nombre entier de 3 à 6

b = 2 lorsque M = Al et 3 lorsque M = Mg

c = 2 lorsque M = Al et 0 lorsque M = Mg,

ledit complexe étant fixé par imprégnation sur un support d'oxyde inorganique ; et

(ii) un co-catalyseur du type hydrocarbylaluminium.

4. Catalyseur suivant l'une quelconque des revendications 1 à 3, dans lequel ED est choisi entre des éthers d'alkyle et de cycloalkyle ayant 2 à 20 atomes de carbone ; des alkyl- et arylphosphines ayant 3 à 20 atomes de carbone ; des dialkyl-, diaryl- et alkylarylcétones ayant 3 à 20 atomes de carbone ; des isocyanures d'alkyle et d'aryle ayant 2 à 20 atomes de carbone ; et des esters alkyliques, alkoxyliques et alkylalkoxyliques d'acides alkyl- et arylcarboxyliques ayant 2 à 20 atomes de carbone.

5. Catalyseur suivant la revendication 4, dans lequel ED est choisi entre le tétrahydrofuranne et la triéthylphosphine.

6. Catalyseur suivant l'une quelconque des revendications 1 et 3 à 5, dans lequel le support est la silice.

7. Catalyseur suivant la revendication 1, dans lequel le promoteur est représenté par la formule :

$$R_xCX_{(4-x)}$$

dans laquelle

R = hydrogène ou radical alkyle ayant 1 à 6 atomes de carbone non substitué ou substitué par un halogène ;

X = halogène ; et

x = 0, 1 ou 2.

8. Catalyseur suivant la revendication 7, dans lequel le promoteur est un méthane ou éthane à substituant fluoro, chloro ou bromo ayant au moins 2 atomes d'halogènes attachés à un atome de carbone.

9. Catalyseur suivant l'une quelconque des revendications 1 à 8, dans lequel le co-catalyseur est représenté par la formule $R_3Al$ où chaque R est un radical alkyle, cycloalkyle, aryle ou hydrure ; au moins un R est un radical hydrocarbyle ; deux ou trois radicaux R peuvent s'associer pour former un radical cyclique à structure hétérocyclique, tous les R peuvent être identiques ou différents ; et chaque R, qui est un radical hydrocarbyle, a 1 à 20 atomes de carbone.

10. Catalyseur suivant la revendication 9, dans lequel le co-catalyseur est choisi entre le triéthylaluminium et le triisobutylaluminium.

11. Précurseur de catalyseur de polymérisation d'éthylène, comprenant :

un complexe ayant au moins un cation et au moins un anion dans lequel le cation est $V_2X_3(ED)_m$ et l'anion est $MCl_bR_c$ où

X = Cl, Br ou I ou leurs mélanges

ED = donneur d'électrons choisi entre des éthers, des phosphines,

des cétones, des isocyanures et des esters, chaque donneur d'électrons ayant 2 à 20 atomes de carbone

M = Al ou Mg

R = radical alkyle ayant 1 à 14 atomes de carbone

m = nombre entier de 3 à 6

b = 2 lorsque M = Al et 3 lorsque M = Mg

c = 2 lorsque M = Al et 0 lorsque M = Mg,

ledit complexe étant fixé par imprégnation sur un support d'oxyde inorganique ;

12. Procédé de polymérisation d'éthylène ou d'éthylène conjointement avec au moins un comonomère, qui consiste à mettre en contact le ou les monomères, en phase gazeuse ou liquide, avec un catalyseur suivant l'une quelconque des revendications 1 à 10 de manière à produire un polymère ou un copolymère.

13. Procédé de préparation d'un complexe catalytique fixé sur un support, consistant

(i) à faire refluer, en solution dans un donneur d'électrons ED et sous une atmosphère inerte, un composé répondant à la formule $VX_3(ED)_m$ avec un composé répondant à la formule $R_2AlOR$ ou $R_2AlH$ dans lesquelles

X = Cl, Br ou I ou leurs mélanges

ED est choisi entre des éthers, des phosphines, des cétones, des isocyanures et des esters, chaque donneur d'électrons ayant 2 à 20 atomes de carbone

R = radical alkyle ayant 1 à 14 atomes de carbone, les radicaux R étant identiques ou différents

m est un nombre entier de 3 à 6 ; jusqu'à ce que la solution devienne verte ;

(ii) imprégnation de la solution verte sur un support formé d'un oxyde inorganique ; et

(iii) séchage du support imprégné pour chasser le donneur d'électrons en excès.

14. Procédé suivant la revendication 13, dans lequel le rapport atomique de l'aluminium au vanadium se situe dans la plage d'environ 0,5:1 à environ 3:1.

15. Procédé de préparation d'un complexe fixé sur un support, qui consiste

(i) à faire réagir, en solution dans un donneur d'électrons ED et sous une atmosphère inerte, un composé répondant à la formule $VX_3(ED)_m$ avec un composé répondant à la formule $R_2AlH$ dans lesquelles

X = Cl, Br ou I ou leurs mélanges

ED est choisi entre des éthers, des phosphines, des cétones, des isocyanures et des esters, chaque donneur d'électrons ayant 2 à 20 atomes de carbone,

R est un radical alkyle ayant 1 à 14 atomes de carbone, les radicaux R étant identiques ou différents

m est un nombre entier de 3 à 6 ; jusqu'à ce que la solution devienne verte ;

(ii) à imprégner de la solution verte un support formé d'oxyde inorganique ; et

(iii) à sécher le support imprégné pour chasser le donneur d'électrons en excès.